# EUROPEAN PATENT APPLICATION

(11) **EP 4 832 400 A1**
(43) Date of publication of application: **28.10.2026**
(21) Application number: 25171568.6
(22) Date of filing: 22.04.2025
(51) Int. Cl.: H04L 5/00, H04B 7/06

(54) **ADAPTIVE DOWNLINK BEAMFORMING**

(71) Applicant: Nokia Technologies Oy, 02610 Espoo (FI)
(72) Inventor: TAYYAB, Muhammad, Oulu (FI); LASELVA, Daniela, Klarup (DK); LAKSHMINARAYANAPURAM KRISHNAKUMAR, Kamakshi, Espoo (FI); AICHMANN, Wolfgang Ulrich, Illertissen (DE)
(74) Representative: Nokia EPO representatives

(57) **Abstract**

An apparatus and method are provided for dynamic control of Channel State Information (CSI) reporting and Sounding Reference Signal (SRS) transmission in wireless communication systems. A first apparatus receives from a second apparatus at least one CSI reporting configuration and one SRS resource or resource set, along with evaluation criteria including a reference signal transmit power and a path loss offset threshold. The apparatus measures received power over multiple transmissions of a reference signal such as a Wake-Up Signal (WUS), Low Power Synchronization Signal (LP-SS), or Synchronization Signal Block (SSB), computes a current and previous path loss, and derives a path loss offset. Upon determining that the offset meets a configured threshold, the apparatus selects a different CSI reporting configuration or SRS resource, transmits an indication of the switch, and receives a corresponding confirmation from the second apparatus. The apparatus then continues measurements based on the newly activated configuration or resource.

## Description

### Technical Field

Various example embodiments relate generally to wireless communication systems, and more specifically to mechanisms for dynamically controlling Channel State Information (CSI) reporting and Sounding Reference Signals (SRS) transmission for downlink beamforming in 5G and future mobile networks.

### Background

Downlink (DL) beamforming is a key feature in advanced wireless communication systems, particularly in 5G New Radio (NR), where it is used to enhance coverage, spectral efficiency, and user experience. In Time Division Duplex (TDD) systems, beamforming relies on the estimation of downlink channel characteristics, which can be acquired either through uplink reference signals transmitted by the user equipment (UE), such as SRS, or through CSI feedback provided by the UE in response to downlink reference signals like single channel state information reference signal (CSI-RS). In Frequency Division Duplex (FDD) systems, downlink channel estimation is typically based on CSI feedback, while TDD systems can exploit uplink/downlink channel reciprocity, allowing base stations to derive downlink beamforming weights from uplink transmissions like SRS.

In conventional 5G systems, the network configures the UE to periodically transmit SRS and/or report CSI, which may include parameters such as the Precoding Matrix Indicator (PMI), Rank Indicator (RI), and Channel Quality Indicator (CQI). The choice of beamforming method and the associated signalling depends on several factors, including the duplexing mode, radio conditions, and network implementation. Existing mechanisms enable the network to request SRS or CSI reporting through higher-layer signalling (e.g., RRC) or via control signalling such as Downlink Control Information (DCI). These procedures form the basis of beamforming operation in both single-user and multi-user MIMO (SU-MIMO, MU-MIMO) scenarios.

### Summary

According to some aspects, there is provided the subject matter of the independent claims. Some further aspects are defined in the dependent claims. The embodiments that do not fall under the scope of the claims are to be interpreted as examples useful for understanding the disclosure.

According to a first aspect, there is provided a first apparatus comprising: at least one processor; and at least one memory storing instructions that, when executed by the at least one processor, cause the first apparatus to: receive from a second apparatus at least a first Channel State Information, CSI, reporting configuration including an association with at least a first Sounding Reference Signal, SRS, resource or resource set; receive from the second apparatus an indication related to activation or deactivation of the first CSI reporting configuration; determine an activation status of the first SRS resource or resource set based at least in part on the received indication from the second apparatus; and adjust at least one of a measurement operation or a reference signal transmission based at least in part on the activation or deactivation of the first CSI reporting configuration and the activation status of the first SRS resource or resource set.

According to a second aspect, there is provided a system comprising a first apparatus and a second apparatus, the first apparatus comprising: at least one processor; and at least one memory storing instructions that, when executed by the at least one processor, cause the first apparatus to: receive from the second apparatus at least a first Channel State Information, CSI, reporting configuration including an association with at least a first Sounding Reference Signal, SRS, resource or resource set; receive from the second apparatus an indication related to activation or deactivation of the first CSI reporting configuration; determine an activation status of the first SRS resource or resource set based at least in part on the received indication from the second apparatus; and adjust at least one of a measurement operation or a reference signal transmission based at least in part on the activation or deactivation of the first CSI reporting configuration and the activation status of the first SRS resource or resource set.

According to a third aspect, there is provided a method, comprising: receiving a first Channel State Information, CSI, reporting configuration, comprising an association with a Sounding Reference Signal, SRS, resource or resource set; receiving an indication related to activation or deactivation of the first CSI reporting configuration; determining an activation status of the first SRS resource or resource set based at least in part on the received indication from the second apparatus; and adjusting at least one of a measurement operation or a reference signal transmission based at least in part on the activation or deactivation of the first CSI reporting configuration and the activation status of the first SRS resource or resource set.

According to a fourth aspect, there is provided a computer program product comprising program instructions which, when the program instructions are executed by a first apparatus, cause the first apparatus to carry out a method of receiving a first Channel State Information, CSI, reporting configuration, comprising an association with a Sounding Reference Signal, SRS, resource or resource set; receiving an indication related to activation or deactivation of the first CSI reporting configuration; determining an activation status of the first SRS resource or resource set based at least in part on the received indication from the second apparatus; and adjusting at least one of a measurement operation or a reference signal transmission based at least in part on the activation or deactivation of the first CSI reporting configuration and the activation status of the first SRS resource or resource set.

According to a fifth aspect, there is provided a computer program product embodied on a non-transitory distribution medium readable by a computer and comprising program instructions which, when the program instructions are executed by a first apparatus, cause the first apparatus to carry out a method of receiving a first Channel State Information, CSI, reporting configuration, comprising an association with a Sounding Reference Signal, SRS, resource or resource set; receiving an indication related to activation or deactivation of the first CSI reporting configuration; determining an activation status of the first SRS resource or resource set based at least in part on the received indication from the second apparatus; and adjusting at least one of a measurement operation or a reference signal transmission based at least in part on the activation or deactivation of the first CSI reporting configuration and the activation status of the first SRS resource or resource set.

According to a sixth aspect, there is provided a first apparatus comprising: means for receiving a first Channel State Information, CSI, reporting configuration, comprising an association with a Sounding Reference Signal, SRS, resource or resource set; means for receiving an indication related to activation or deactivation of the first CSI reporting configuration; means for determining an activation status of the first SRS resource or resource set based at least in part on the received indication from the second apparatus; and means adjusting at least one of a measurement operation or a reference signal transmission based at least in part on the activation or deactivation of the first CSI reporting configuration and the activation status of the first SRS resource or resource set.

In some exemplary embodiments of any of aspects 1-6, the first apparatus is User Equipment, UE, of a mobile communication system.

In some exemplary embodiments of any of aspects 1-6, the second apparatus is a network node of a mobile communication system.

In some exemplary embodiments of any of aspects 1-6, the measurement operation comprises at least one CSI-related action.

In some exemplary embodiments of any of aspects 1-6, the CSI-related action comprises at least one of: a Pre-coding Matrix Indicator, PMI, calculation; a Rank Indicator, RI, calculation; or a Channel Quality Indicator, CQI, calculation.

In some exemplary embodiments of any of aspects 1-6, the reference signal transmission comprises an SRS transmission.

In some exemplary embodiments of any of aspects 1-6, the indication related to the activation or deactivation of the first CSI reporting configuration comprises at least a CSI reporting configuration index.

In some exemplary embodiments of any of aspects 1-6, the association between the SRS resource or resource set and first CSI reporting configuration is provided in a Radio Resource Control, RRC, configuration.

In some exemplary embodiments of any of aspects 1-6, the determination of the activation status of the first SRS resource or resource set is based at least in part on the first CSI reporting configuration being activated.

In some exemplary embodiments of any of aspects 1-6, the indication related to activation or deactivation of the first CSI reporting configuration received from the second apparatus is provided to the first apparatus in the form of Downlink Control Information, DCI or a Medium Access Control Control Element, MAC CE.

In some exemplary embodiments of any of aspects 1-6, the determination of the activation status of the first SRS resource or resource set is further based on a preconfigured rule linking the activation of the first CSI reporting configuration to the activation or deactivation of the first SRS resource or resource set.

In some exemplary embodiments of any of aspects 1-6, the first SRS resource or resource set comprises one or more SRS resources configured with sub-band granularity.

In some exemplary embodiments of any of aspects 1-6, the association between the first CSI reporting configuration and the first SRS resource or resource set is stored in a configuration table at the first apparatus and used to determine reference signal behaviour.

According to a seventh aspect, there is provided a first apparatus comprising: at least one processor; and at least one memory storing instructions that, when executed by the at least one processor, cause the first apparatus to: receive from a second apparatus a Sounding Reference Signal, SRS, resource or resource set, wherein the SRS resource or resource set comprises a list of SRS parameters; receive from the second apparatus an indication to update at least one of the SRS parameters; and transmit SRS to the second apparatus based at least in part on the updated SRS parameters.

According to a eighth aspect, there is provided a system comprising a first apparatus and a second apparatus, the first apparatus comprising: at least one processor; and at least one memory storing instructions that, when executed by the at least one processor, cause the first apparatus to: receive from the second apparatus a Sounding Reference Signal, SRS, resource or resource set, wherein the SRS resource or resource set comprises a list of SRS parameters; receive from the second apparatus an indication to update at least one of the SRS parameters; and transmit SRS to the second apparatus based at least in part on the updated SRS parameters.

According to a ninth aspect, there is provided a method, comprising: receiving a Sounding Reference Signal, SRS, resource or resource set, wherein the SRS resource or resource set comprises a list of SRS parameters; receiving an indication to update at least one of the SRS parameters; and transmitting SRS based at least in part on the updated SRS parameters.

According to a tenth aspect, there is provided a computer program product comprising program instructions which, when the program instructions are executed by a first apparatus, cause the first apparatus to carry out a method of receiving a Sounding Reference Signal, SRS, resource or resource set, wherein the SRS resource or resource set comprises a list of SRS parameters; receiving an indication to update at least one of the SRS parameters; and transmitting SRS based at least in part on the updated SRS parameters.

According to a eleventh aspect, there is provided a computer program product embodied on a non-transitory distribution medium readable by a computer and comprising program instructions which, when the program instructions are executed by a first apparatus, cause the first apparatus to carry out a method of receiving a Sounding Reference Signal, SRS, resource or resource set, wherein the SRS resource or resource set comprises a list of SRS parameters; receiving an indication to update at least one of the SRS parameters; and transmitting SRS based at least in part on the updated SRS parameters.

According to a twelfth aspect, there is provided a first apparatus, comprising: means for receiving a Sounding Reference Signal, SRS, resource or resource set, wherein the SRS resource or resource set comprises a list of SRS parameters; means for receiving an indication to update at least one of the SRS parameters; and means for transmitting SRS based at least in part on the updated SRS parameters.

In some exemplary embodiments of any of aspects 7-12, the first apparatus is User Equipment, UE, of a mobile communication system.

In some exemplary embodiments of any of aspects 7-12, the second apparatus is a network node of a mobile communication system.

In some exemplary embodiments of any of aspects 7-12, the SRS resource or resource set is provided to the UE in Radio Resource Control, RRC.

In some exemplary embodiments of any of aspects 7-12, the indication is provided to the UE with Medium Access Control-Control Element, MAC-CE, or Downlink Control Information, DCI.

In some exemplary embodiments of any of aspects 7-12, the SRS parameters comprise at least one of: comb offset or cyclic shift.

In some exemplary embodiments of any of aspects 7-12, the SRS parameter to be updated is configured to apply for a predefined duration. The apparatus may be configured to revert to a default SRS configuration after expiration of the predefined duration.

In some exemplary embodiments of any of aspects 7-12, the updated SRS parameter applies to a sub-band SRS configuration.

In some exemplary embodiments of any of aspects 7-12, the apparatus is configured to dynamically switch between wideband and sub-band SRS configurations.

In some exemplary embodiments of any of aspects 7-12, the SRS resource or resource set comprises a plurality of SRS resources associated with one or more SRS resource sets.

In some exemplary embodiments of any of aspects 7-12, the SRS resource or resource set comprises at least one of: transmission comb; at least one frequency hopping parameter; transmission periodicity; or resource mapping.

In some exemplary embodiments of any of aspects 7-12, the indication to update the SRS parameter further comprises a resource ID for identifying the applicable SRS resource within at least one resource set.

According to a thirteenth aspect, there is provided a first apparatus comprising: at least one processor; and at least one memory storing instructions that, when executed by the at least one processor, cause the first apparatus to: receive from a second apparatus at least a first Channel State Information, CSI, Reporting Configuration and at least a first Sounding Reference Signal, SRS, resource or resource set wherein at least one CSI reporting configuration or at least one SRS resource or resource set is activated; receive from a second apparatus at least one evaluation criterion for determining at least one of the following: to switch between the first and a second CSI reporting configuration or SRS resource or resource set; determine the switch to a second CSI reporting configuration or SRS resource or resource set; transmit an indication to the second apparatus to indicate the switch to a second CSI reporting configuration or SRS resource or resource set; receive from the second apparatus an indication to switch to a second CSI reporting configuration or SRS resource or resource set; and perform measurements based at least in part on the activation status of the second CSI reporting configuration or SRS resource or resource set.

According to a fourteenth aspect, there is provided a system comprising a first apparatus and a second apparatus, the first apparatus comprising: at least one processor; and at least one memory storing instructions that, when executed by the at least one processor, cause the first apparatus to: receive from a second apparatus at least a first Channel State Information, CSI, reporting configuration and at least a first Sounding Reference Signal, SRS, resource or resource set wherein at least one CSI reporting configuration or at least one SRS resource or resource set is activated; receive from a second apparatus at least one evaluation criterion for determining at least one of the following: to switch between the first and a second CSI reporting configuration or SRS resource or resource set; determine the switch to a second CSI reporting configuration or SRS resource or resource set; transmit an indication to the second apparatus to indicate the switch to a second CSI reporting configuration or SRS resource or resource set; receive from the second apparatus an indication to switch to a second CSI reporting configuration or SRS resource or resource set; and perform measurements based at least in part on the activation status of the second CSI reporting configuration or SRS resource or resource set.

According to a fifteenth aspect, there is provided a method, comprising: receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion for determining at least one of the following: to switch between the first and a second CSI reporting configuration or SRS resource or resource set; determining the switch to a second CSI reporting configuration or SRS resource or resource set; transmitting an indication to indicate the switch to a second CSI reporting configuration or SRS resource or resource set; receiving an indication to switch to a second CSI reporting configuration or SRS resource or resource set; and performing measurements based at least in part on the activation status of the second CSI reporting configuration or SRS resource or resource set.

According to a sixteenth aspect, there is provided a computer program product comprising program instructions which, when the program instructions are executed by a first apparatus, cause the first apparatus to carry out a method of receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion for determining at least one of the following: to switch between the first and a second CSI reporting configuration or SRS resource or resource set; determining the switch to a second CSI reporting configuration or SRS resource or resource set; transmitting an indication to indicate the switch to a second CSI reporting configuration or SRS resource or resource set; receiving an indication to switch to a second CSI reporting configuration or SRS resource or resource set; and performing measurements based at least in part on the activation status of the second CSI reporting configuration or SRS resource or resource set.

According to a seventeenth aspect, there is provided a computer program product embodied on a non-transitory distribution medium readable by a computer and comprising program instructions which, when the program instructions are executed by a first apparatus, cause the first apparatus to carry out a method of receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion for determining at least one of the following: to switch between the first and a second CSI reporting configuration or SRS resource or resource set; determining the switch to a second CSI reporting configuration or SRS resource or resource set; transmitting an indication to indicate the switch to a second CSI reporting configuration or SRS resource or resource set; receiving an indication to switch to a second CSI reporting configuration or SRS resource or resource set; and performing measurements based at least in part on the activation status of the second CSI reporting configuration or SRS resource or resource set.

According to an eighteenth aspect, there is provided a first apparatus, comprising: means for receiving at least a first Channel State Information, CSI, reporting configuration and at least a first Sounding Reference Signal, SRS, resource or resource set, wherein at least one CSI reporting configuration or at least one SRS resource or resource set is activated; means for receiving at least one evaluation criterion for determining at least one of the following: to switch between the first and a second CSI reporting configuration or SRS resource or resource set; means for determining the switch to a second CSI reporting configuration or SRS resource or resource set; means for transmitting an indication to indicate the switch to a second CSI reporting configuration or SRS resource or resource set; means for receiving an indication to switch to a second CSI reporting configuration or SRS resource or resource set; and means for performing measurements based at least in part on the activation status of the second CSI reporting configuration or SRS resource or resource set.

In some exemplary embodiments of any of aspects 13-18, the first apparatus is User Equipment, UE, of a mobile communication system.

In some exemplary embodiments of any of aspects 13-18, the second apparatus is a network node of a mobile communication system.

In some exemplary embodiments of any of aspects 13-18, the determination of the first apparatus to switch to a second CSI reporting configuration or SRS resource or resource set comprises Precoding Matrix Indicator, PMI, reporting.

In some exemplary embodiments of any of aspects 13-18, wherein the evaluation criterion is related to the downlink, DL, pathloss or Reference Signal Received Power, RSRP. In some example embodiments, the evaluation criterion comprises a threshold value for a change in RSRP, and the apparatus determines to switch upon detecting a drop exceeding the threshold. In further example embodiments, the apparatus is configured to average multiple RSRP measurements over a predetermined period prior to making the switch determination.

In some exemplary embodiments of any of aspects 13-18, the evaluation criterion is at least partially derived from at least one of: Synchronization Signal Block, SSB; Wake-Up Signal, WUS; or Channel State Information-Reference Signal, CSI-RS. In some example embodiments, the first apparatus requests the activation of at least one SSB from the second apparatus in response to an evaluation failure.

In some exemplary embodiments of any of aspects 13-18, the first CSI reporting configuration comprises periodic CSI reporting.

In some exemplary embodiments of any of aspects 13-18, the second CSI reporting configuration comprises aperiodic CSI reporting.

In some exemplary embodiments of any of aspects 13-18, the indication to switch is transmitted to the second apparatus using at least one of: a Medium Access Control, MAC, Control Element or uplink Downlink Control Information, DCI, signalling.

In some exemplary embodiments of any of aspects 13-18, the first apparatus is configured to re-evaluate the evaluation criterion at predetermined periodic intervals.

According to a nineteenth aspect, there is provided an apparatus, referred to as a first apparatus, comprising: at least one processor; and at least one memory storing instructions that, when executed by the at least one processor, cause the first apparatus to: receive from a second apparatus at least a first Channel State Information, CSI, reporting configuration and at least a first Sounding Reference Signal, SRS, resource or resource set, wherein at least one CSI reporting configuration or at least one SRS resource or resource set is activated; receive from the second apparatus at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; measure received power of a plurality of transmissions of the reference signal; compute a path loss offset based at least in part on a difference between a current path loss and a previous path loss, the current and initial path loss each being values based on an average of received power measurements for respective sets of the reference signal; determine that the path loss offset satisfies the at least one threshold; determine a switch to a second CSI reporting configuration or SRS resource or resource set based at least in part on the determination that the path loss offset satisfies the at least one threshold; transmit an indication to the second apparatus to indicate the switch to the second CSI reporting configuration or SRS resource or resource set; receive from the second apparatus an indication to switch to the second CSI reporting configuration or SRS resource or resource set; and perform measurements based at least in part on the activation status of the second CSI reporting configuration or SRS resource or resource set.

According to a twentieth aspect, there is provided a system comprising a first apparatus and a second apparatus, the first apparatus comprising: at least one processor; and at least one memory storing instructions that, when executed by the at least one processor, cause the first apparatus to: receive from a second apparatus at least a first channel state information, CSI, reporting configuration and at least a first sounding reference signal, SRS, resource or resource set, wherein at least one CSI reporting configuration or at least one SRS resource configuration is activated; receive from the second apparatus at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; measure received power of a plurality of transmissions of the reference signal; compute a path loss offset based at least in part on a difference between a current path loss and an initial path loss, the current and initial path loss each being values based on an average of received power measurements for respective sets of the reference signal; determine that the path loss offset satisfies the at least one threshold; determine a switch to a second CSI reporting configuration or SRS resource or resource set based at least in part on the determination that the path loss offset satisfies the threshold; transmit an indication to the second apparatus to indicate the switch to the second CSI reporting configuration or SRS resource or resource set; receive from the second apparatus an indication to switch to the second CSI reporting configuration or SRS resource or resource set; and perform measurements based at least in part on the activation status of the second CSI reporting configuration or SRS resource or resource set.

According to a twenty first aspect, there is provided a method, comprising: receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; measuring received power of a plurality of transmissions of the reference signal; computing a path loss offset based at least in part on a difference between a current path loss and an initial path loss, the current and initial path loss each being based on an average of received power measurements for respective sets of the reference signal; determining that the path loss offset satisfies the at least one threshold; determining a switch to a second CSI reporting configuration or SRS resource or resource set based at least in part on the determination that the path loss offset satisfies the threshold; transmitting an indication to indicate the switch to the second CSI reporting configuration or SRS resource or resource set; receiving an indication to switch to the second CSI reporting configuration or SRS resource or resource set; and performing measurements based at least in part on the activation status of the second CSI reporting configuration or SRS resource or resource set.

According to a twenty second aspect, there is provided a computer program product comprising program instructions which, when the program instructions are executed by a first apparatus, cause the first apparatus to carry out a method of receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; measuring received power of a plurality of transmissions of the reference signal; computing a path loss offset based at least in part on a difference between a current path loss and an initial path loss, the current and initial path loss each being based on an average of received power measurements for respective sets of the reference signal; determining that the path loss offset satisfies the at least one threshold; determining a switch to a second CSI reporting configuration or SRS resource or resource set based at least in part on the determination that the path loss offset satisfies the threshold; transmitting an indication to indicate the switch to the second CSI reporting configuration or SRS resource or resource set; receiving an indication to switch to the second CSI reporting configuration or SRS resource or resource set; and performing measurements based at least in part on the activation status of the second CSI reporting configuration or SRS resource or resource set.

According to a twenty third aspect, there is provided a computer program product embodied on a non-transitory distribution medium readable by a computer and comprising program instructions which, when the program instructions are executed by a first apparatus, cause the first apparatus to carry out a method of receiving at least a first Channel State Information, CSI, reporting configuration and at least a first Sounding Reference Signal, SRS, resource or resource set, wherein at least one CSI reporting configuration or at least one SRS resource or resource set is activated; receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; measuring received power of a plurality of transmissions of the reference signal; computing a path loss offset based at least in part on a difference between a current path loss and an initial path loss, the current and initial path loss each being based on an average of received power measurements for respective sets of the reference signal; determining that the path loss offset satisfies the at least one threshold; determining a switch to a second CSI reporting configuration or SRS resource or resource set based at least in part on the determination that the path loss offset satisfies the threshold; transmitting an indication to indicate the switch to the second CSI reporting configuration or SRS resource or resource set; receiving an indication to switch to the second CSI reporting configuration or SRS resource or resource set; and performing measurements based at least in part on the activation status of the second CSI reporting configuration or SRS resource or resource set.

According to a twenty fourth aspect, there is provided an apparatus, referred to as a first apparatus, comprising: means for receiving at least a first Channel State Information, CSI, reporting configuration and at least a first Sounding Reference Signal, SRS, resource or resource set, wherein at least one CSI reporting configuration or at least one SRS resource or resource set is activated; means for receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset; means for measuring received power of a plurality of transmissions of the reference signal; means for computing a path loss offset based at least in part on a difference between a current path loss and an initial path loss, the current and initial path loss each being based on an average of received power measurements for respective sets of the reference signal; means for determining that the path loss offset satisfies the at least one threshold; means for determining a switch to a second CSI reporting configuration or SRS resource or resource set based at least in part on the determination that the path loss offset satisfies the threshold; means for transmitting an indication to indicate the switch to the second CSI reporting configuration or SRS resource or resource set; means for receiving an indication to switch to the second CSI reporting configuration or SRS resource or resource set; and means for performing measurements based at least in part on the activation status of the second CSI reporting configuration or SRS resource or resource set.

In some exemplary embodiments of any of aspects 19-24, the transmit power of the reference signal is signalled to the first apparatus via radio resource control, RRC, configuration.

In some exemplary embodiments of any of aspects 19-24, the received power of the reference signal is measured by a wake-up receiver (WRx).

In some exemplary embodiments of any of aspects 19-24, the current path loss value is generated by averaging a predetermined number M of most recent path loss values.

In some exemplary embodiments of any of aspects 19-24, the number M is determined by the second apparatus.

In some exemplary embodiments of any of aspects 19-24, the at least one threshold associated with path loss offset comprises a first threshold and a second threshold.

In some exemplary embodiments of any of aspects 19-24, the first threshold is lower than the second threshold. In some example embodiments, satisfying the first threshold triggers the first apparatus to request the second apparatus to transmit an SSB. In some further example embodiments, satisfying the second threshold triggers a switch to a second CSI reporting configuration or SRS resource or resource set. In yet further example embodiments, the threshold values are adjusted dynamically based on at least one operating condition.

In some exemplary embodiments of any of aspects 19-24, the path loss offset is periodically evaluated by the first apparatus at fixed time intervals.

### Drawings

In the following, example embodiments will be described in greater detail with reference to the embodiments and the accompanying drawings, in which:
Figure 1 shows an example of a wireless communication network, to which various example embodiments described herein may be applied;
Figure 2 shows a signalling diagram for PMI-based DL beamforming;
Figure 3 shows a signalling diagram for SRS-based DL beamforming;
Figure 4 shows an arrangement operable to dynamically switch between SRS-based and PMI-based DL beamforming by activating or deactivating associated configurations;
Figures 5a and 5b show arrangements operable to dynamically switch between wideband and sub-band SRS resources using MAC-CE or DCI signalling;
Figure 6 shows an arrangement in which a first apparatus is operable to autonomously switch between PMI and SRS configurations based on path loss or received signal strength criteria;
Figure 7 shows a flowchart detailing the UE-side path loss estimation;
Figure 8 shows a first apparatus determining whether to activate or deactivate an SRS resource or resource set based on the activation status of an associated CSI reporting configuration;
Figure 9 shows a first apparatus updating one or more SRS parameters based on a provided indication provided by a second apparatus;
Figure 10 shows a first apparatus switching between CSI or SRS resource or resource sets based on an evaluation criterion and notifying a second apparatus;
Figure 11 shows a UE computing a path loss offset from WUS/SSB signals; and
Figure 12 shows an apparatus comprising processing, memory, user interface, and radio interface components for implementing any of the described methods.

### Detailed Description

Various example embodiments relate generally to methods, apparatuses, and systems for dynamic control of beamforming configurations in wireless communication systems, including switching between SRS transmission and PMI reporting for downlink beamforming.

In TDD systems, downlink beamforming based on SRS may be employed for UEs that experience good radio conditions. By contrast, beamforming based on PMI reporting is used when the uplink signal-to-interference-plus-noise ratio (SINR) of SRS, as measured by the next-generation NodeB (gNB), falls below a certain threshold, such as -15 dB. The existing network implementation supports dynamic switching between SRS-based and PMI-based downlink beamforming primarily based on this uplink SINR metric. However, while this switching mechanism is functional, it may be limited in flexibility and may not account for other important factors such as user traffic demands, uplink resource availability, performance trade-offs between reporting mechanisms, and signal quality at the cell edge due to uplink power limitations.

In order to support dynamic switching, the UE may be configured to always report PMI and always transmit SRS, regardless of whether the network is currently relying on PMI-based or SRS-based beamforming. This inflexible configuration approach introduces inefficiencies. Changing the status of PMI reporting requires an RRC reconfiguration, which can be considered a slow and heavy-handed procedure. This results in unnecessary signalling overhead and increased energy consumption at the UE, especially during periods when either SRS or PMI-based feedback alone is sufficient for the network's downlink beamforming decisions.

The computation of PMI itself is also non-trivial, as it demands significant processing power from the UE. As a result, the UE may be required to perform such complex processing even when PMI is not needed, solely because the configuration mandates continuous PMI reporting. In parallel, SRS resources, particularly wide-band SRS, are valuable uplink resources that must be shared among multiple UEs within a cell. Wide-band SRS resources are not only costly in terms of resource allocation but also more susceptible to power limitations, as the UE's transmit power must be distributed across a wider frequency range. These wide-band SRS configurations are often provided to UEs for a limited time based on favourable conditions, such as good radio quality and sufficient data in the buffer. However, when such conditions change, for example, when a UE's buffer status declines, it becomes beneficial to quickly reassign these costly SRS resources to other UEs. The current signalling framework, however, lacks the flexibility to quickly activate or deactivate these SRS resources in a timely and efficient manner.

Therefore, in some embodiments, there is a need for a more flexible, efficient, and dynamic mechanism to control the activation and deactivation of PMI reporting and SRS transmissions, particularly for downlink beamforming purposes. This includes enabling timely switching between beamforming modes without incurring the overhead and delay of RRC reconfiguration, reducing unnecessary UE processing and power consumption, and optimizing the allocation of scarce SRS resources based on real-time network conditions and UE-specific metrics.

Methods for network acquisition of downlink channel characteristics for beamforming can be categorized based on the mechanism through which the gNB obtains knowledge of the downlink channel state. These mechanisms influence how the network selects appropriate precoding weights for beamforming of the downlink data channel, such as the physical downlink shared channel (PDSCH). The different methods correspond to various MIMO schemes used in current systems.

In the single beam (non-adaptive) method, the gNB transmits a CSI-RS resource. This resource may utilize, for example, 32 antenna ports, with support extending in future releases (e.g., Release 19) to up to 128 ports. Based on the CSI-RS, the UE measures the physical channel. and reports a CSI feedback comprising an RI, PMI, and CQI. Specific CSI-related actions performed by the UE, such as the type of reporting or the parameters included in the report, may be governed by the CSI Report Configuration provided by the network. This configuration determines, for example, whether the UE reports PMI, RI, CQI, or other metrics, and under what triggering conditions.

The PMI is selected by the UE from a predefined codebook, and reflects the preferred precoding matrix for the current channel conditions. In this context, the CSI-RS resource refers to a logical entity defined by 3GPP to describe the transmission configuration, rather than a physical signal transmitted as such. When the number of physical antenna ports at a radio unit (RU) exceeds the number of CSI-RS ports, antenna elements may be grouped into sub-panels, with each NZP-CSI-RS-Resource mapped to a corresponding sub-panel beam. For the actual PDSCH transmission, this sub-panel beam is typically combined with the precoding indicated by the PMI from the codebook. As a result, although the CSI-RS may be associated with a single resource, the effective downlink transmission can involve multiple spatial beams, particularly in higher-rank cases (e.g. rank 3 or 4), where at least one beam per two co-scheduled layers is typically used. This single-beam approach relies on the PMI selected by the UE to indicate the preferred precoding matrix from the configured codebook, enabling the gNB to apply the corresponding beamforming weights during PDSCH transmission.

In a multi-beam CSI-RS Resource Indicator (CRI) based method, the gNB transmits multiple CSI-RS resources in different spatial directions using a smaller number of ports per beam (e.g., 8 ports). The UE evaluates the received CSI-RS signals across these spatial directions and selects the best beam or beams by reporting a CSI report including the CRI, RI, PMI, and CQI. This enables the network to identify the spatial direction that yields the best channel quality for the UE. This method allows a higher degree of spatial selectivity and is referred to as the PMI-based method, as it relies on the PMI provided by the UE to determine downlink precoding.

An alternative approach is the SRS-based method, which is particularly applicable in TDD systems where uplink and downlink channel reciprocity can be exploited. In this method, the UE transmits SRSs, which are uplink signals specifically designed for channel sounding. The gNB receives these SRS and estimates the uplink channel. Given the reciprocal nature of the radio channel in TDD systems, the same channel estimation can be used to derive downlink beamforming weights. This approach reduces the reliance on UE feedback and enables the gNB to determine appropriate beamforming weights directly from the received SRS, providing a more network-centric adaptation process.

In addition to the individual use of PMI-based or SRS-based techniques, there is also the possibility to integrate both approaches. Integration of SRS and CSI reporting can enhance antenna adaptation functionality by allowing the network to dynamically select or combine the information from both SRS-based measurements and CSI feedback from the UE. This integrated method supports flexible and efficient adaptation of beamforming strategies based on current network needs, resource availability, and channel conditions, ultimately improving overall system performance. An "feType-II codebook" approach, which combines CSI-RS-based and SRS-based inputs to support enhanced beamforming, may be used, particularly for FDD systems where channel reciprocity does not hold. In such scenarios, uplink-derived information from SRS may be used to complement downlink CSI-RS measurements, thereby improving the accuracy of downlink precoding while also redistributing computational complexity between the UE and the network. It is noted, however, that the present disclosure is not limited to or dependent on feType-II codebook functionality.

Various exemplary embodiments will now be described which may be used alone or in any combination. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and managing radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device. In some implementations, the network node may also refer to a component of a base station, such as a central unit (gNB-CU), a distributed unit (gNB-DU), or a radio unit (gNB-RU). This includes scenarios where one or more protocol layers, such as Layer 2, are hosted at the radio unit.

Moreover, in connection of split radio access network (RAN), the network device may refer to a centralised unit (CU) of a BS and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, USB dongles, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

For the purposes of the present disclosure, the terms "SRS resource," "SRS resource set," "SRS configuration," "SRS resource or resource set configuration," and "SRS resource configuration" may be used interchangeably unless otherwise explicitly stated. These expressions are intended to encompass the various ways in which sounding reference signal (SRS) transmission parameters may be defined, configured, grouped, or managed for the purposes of uplink channel sounding, including individual SRS resources, sets of resources, or broader SRS configurations encompassing multiple parameters or resource groupings. For consistency, and unless context requires otherwise, the term "SRS resource or resource set" shall be understood to encompass all such variations.

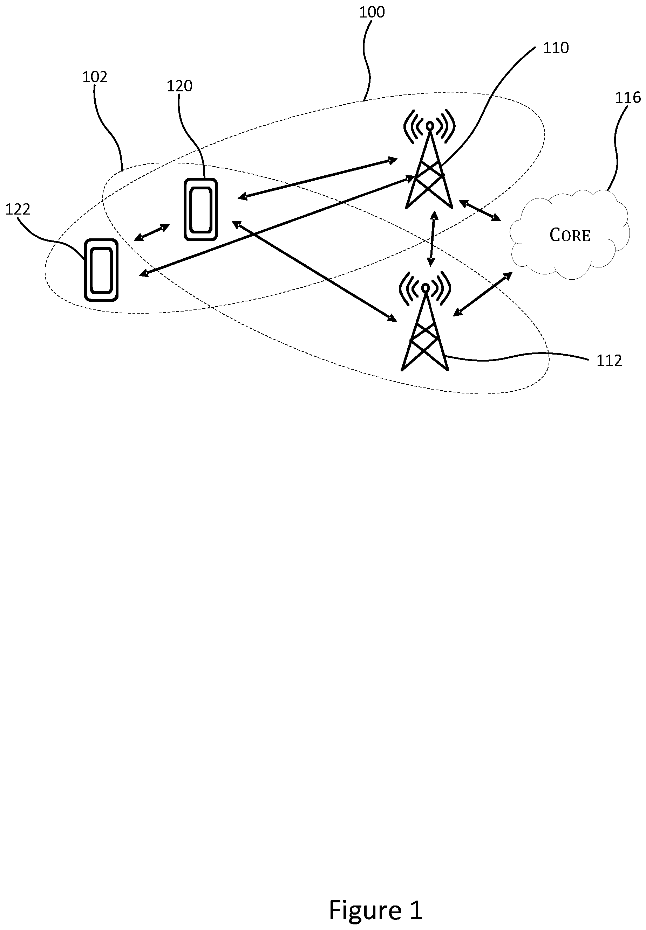

Fig. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

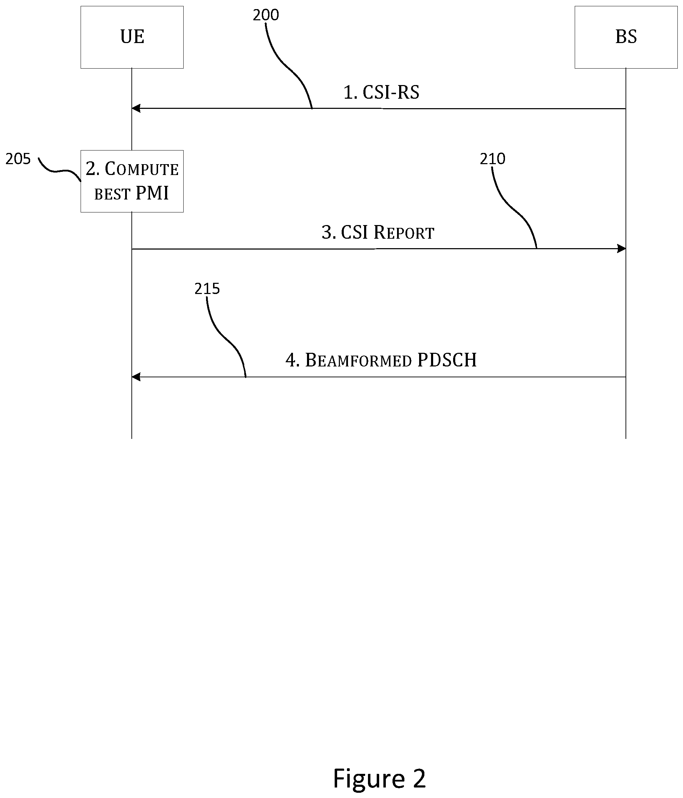

Fig. 2 illustrates a PMI-based downlink beamforming procedure, in which the UE actively contributes to the optimization of the downlink transmission by measuring the radio environment and reporting channel state information to the BS. This process enables user-centric optimization of downlink performance through dynamic precoding adaptation in response to varying channel conditions.

At a first step 200, the UE receives channel state information reference signals (CSI-RS) transmitted by the base station. These reference signals are used to characterise the downlink channel in one or more spatial directions. The UE performs measurements on the received CSI-RS in order to evaluate the channel characteristics.

At a second step 205, based on the measured CSI-RS, the UE constructs a MIMO channel matrix that represents the downlink propagation environment. The UE then processes this matrix to determine the most suitable precoding matrix for transmission. This determination is made by selecting the best PMI from a predefined set of codebook entries as specified by 3GPP. The codebook contains candidate precoding matrices, and the selected PMI corresponds to the matrix that maximizes a given performance metric (e.g., signal-to-noise ratio or capacity) under current channel conditions.

At a third step 210, the UE transmits a CSI report to the base station. This CSI report includes the selected PMI, and may also include additional parameters such as the RI and CQI, depending on the reporting configuration. The feedback is transmitted via the uplink and reflects the assessment of the UE of the optimal downlink transmission parameters.

At a fourth step 215, upon receiving the PMI from the UE, the base station selects the corresponding precoding matrix and applies it to the physical downlink shared channel (PDSCH). The downlink transmission is thus beamformed according to the matrix that best matches the current channel conditions as measured by the UE. This results in an improved downlink transmission, improving both signal quality and spectral efficiency. In examples where the network configures the UE with multiple CSI-RS resources, the UE may additionally report CRI to identify the preferred spatial beam direction. Based on the reported CRI and PMI, the base station can perform a combined beamforming and precoding operation; beamforming at the sub-panel level according to the CRI, and precoding according to the selected matrix indicated by the PMI. This combined strategy may effectively enhance spatial selectivity and signal quality, and can be viewed as an integrated form of beamforming, enabling more efficient adaptation to the radio environment.

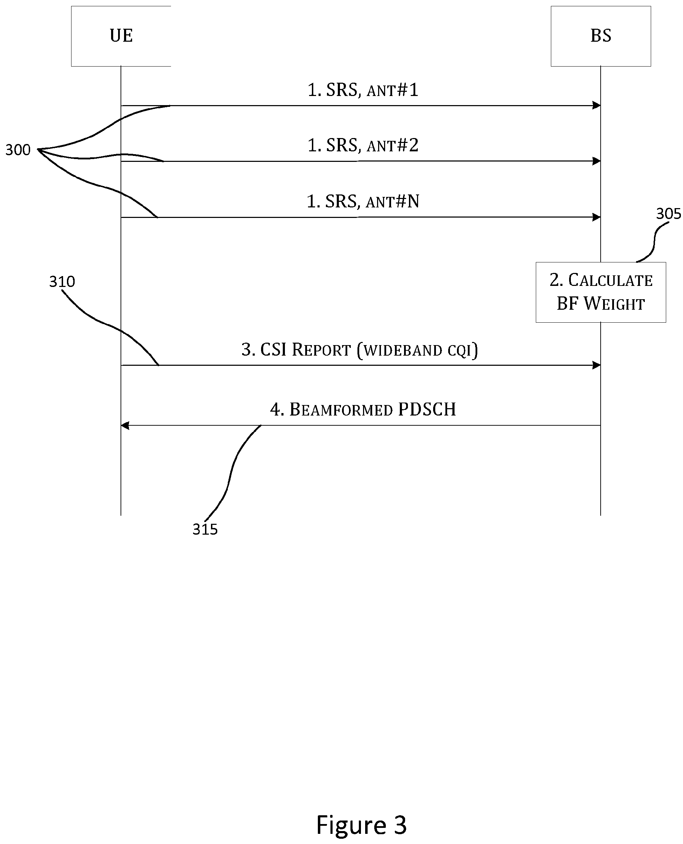

Figure 3 illustrates an SRS-based downlink beamforming procedure, which operates by exploiting the channel reciprocity inherent in TDD systems. In this approach, the uplink channel characteristics, as observed through the reception of SRS, are used by the base station to infer the corresponding downlink channel. This eliminates the need for explicit downlink channel estimation and enables efficient and accurate precoding, particularly in single-user (SU) and multi-user (MU) MIMO scenarios.

At a first step 300, the UE transmits at least one SRS instance on the uplink. The one or more SRS signals are configured by the network and transmitted independently of uplink data scheduling, allowing for flexible and consistent channel sounding. The SRS are designed to provide high-quality uplink channel estimates to the base station over a configured frequency range.

At a second step 305, the base station receives the SRS and performs uplink channel estimation. Based on the principle of UL-DL reciprocity in TDD, the base station then calculates the optimal downlink precoding weights corresponding to the estimated channel. These precoding weights are used to steer the downlink beam in the direction that maximizes signal quality and throughput for the UE.

At a third step 310, the UE provides a CSI report that includes, at minimum, a wideband CQI. The reported CQI serves as coarse-granularity feedback regarding the downlink channel quality. This information may be further refined by the base station using channel measurements derived from the received SRS, thereby supporting more precise scheduling and modulation decisions for downlink transmissions.

At a fourth step 315, the base station applies the calculated precoding weights to the physical downlink shared channel (PDSCH), enabling beamformed downlink data transmission to the UE. This beamforming strategy, informed by the SRS-based channel estimate, may enhance the downlink signal quality and improves overall data rates and user experience.

In further aspects of the SRS-based downlink beamforming procedure, it is noted that CSI-RS resources in the downlink may be configured as cell-specific, meaning that all UEs within a given cell may receive the same CSI-RS signals, while their respective CSI feedback remains UE-specific. Although SRS-based beamforming is primarily applicable in TDD systems due to UL-DL reciprocity, there is some potential for leveraging SRS information in FDD systems as well. In such cases, while SRS may not fully replace the need for PMI reporting, it may still support useful functionality such as CRI reporting. Additionally, it has been observed that for wideband beamforming, the use of codebook-based SRS with just two SRS ports is generally sufficient to obtain effective performance.

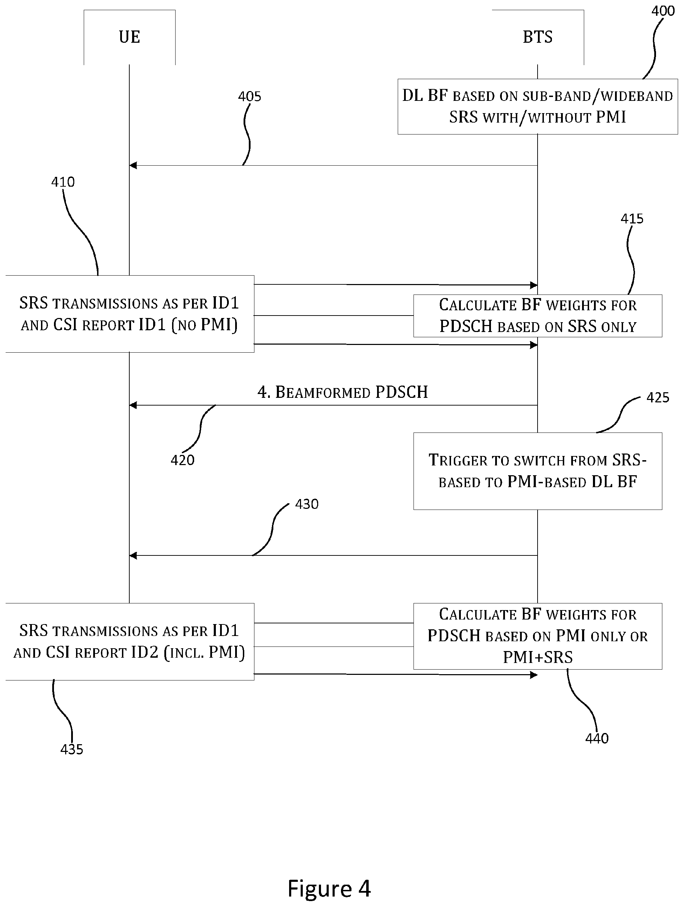

Figure 4 illustrates a dynamic switching procedure between SRS-based and PMI-based downlink beamforming (DL BF), allowing the network to selectively activate or deactivate corresponding UE reporting configurations via signalling. The approach enables more efficient use of uplink resources and reduces unnecessary UE-side processing by supporting more flexible, real-time switching between CSI Report Configurations based on network-determined criteria. The illustrated embodiment assumes that the network initially operates using SRS-based beamforming, with the capability to switch to PMI-based beamforming as needed.

At step 400, corresponding to system initialization, the base station performs downlink beamforming based on SRS transmissions, which may be configured as sub-band or wideband, and may or may not be accompanied by PMI reporting. In the initial state, SRS-based beamforming is active without requiring PMI from the UE. During operation, the network may also dynamically switch between sub-band SRS and wideband SRS configurations based on current channel conditions, resource availability, or UE-specific requirements.

At step 405, using new RRC signalling, the network configures the UE with at least two CSI-ReportConfig entities: a first configuration (CSI Report Config ID1) that includes reporting quantities such as the CRI and CQI but excludes the PMI, and a second configuration (CSI Report Config ID2) that includes CRI, RI, PMI, and CQI. The first configuration is set as active, while the second is set as inactive. Additionally, an SRS resource (e.g., SRS Resource ID1) may be configured for use in downlink beamforming, and an association between the SRS Resource ID and CSI Report Config ID2 may be established in the same RRC message. This configuration allows later dynamic switching via fast signalling without further RRC procedures. In some examples, where the network relies solely on SRS-based channel measurements for downlink beamforming or precoding, the inclusion of the CSI-RS Resource Indicator (CRI) in the CSI Report Config ID1 may not be required. In such cases, CSI Report Config ID1 may be configured to include only the Channel Quality Indicator (CQI), excluding both the PMI and CRI. This further reduces the uplink signalling overhead and simplifies UE-side processing in scenarios where CSI-RS-based beam selection is not employed, and beamforming is performed exclusively based on uplink SRS measurements.

At step 410, the UE begins transmitting SRS according to the configured SRS Resource ID1 and performs CSI reporting in accordance with CSI Report Config ID1, which does not include PMI. At this stage, downlink beamforming is performed by the network based solely on the received SRS and the corresponding CSI feedback from the UE, excluding PMI.

At step 415, the network calculates precoding weights for the PDSCH using only the received SRS measurements. Since the system is currently operating in SRS-based beamforming mode, this step reflects a network-centric approach that avoids requiring complex UE-side PMI computation.

At step 420, the base station continues beamformed PDSCH transmissions using the previously calculated weights.

At step 425, the network evaluates whether a switch to PMI-based beamforming is needed. This decision may be based on a variety of factors, including but not limited to: an observed drop in uplink SINR (e.g., below a configured threshold), an indication from the AMF that the UE is stationary (as part of the UE's subscription information), a UE-generated assistance message indicating temporarily stationary status, knowledge that the UE is not at the cell edge, or the presence of high downlink traffic demand for the given UE. These criteria reflect a combination of signal quality, mobility state, and traffic-driven decision-making.

At step 430, based on its internal decision logic, the network dynamically signals the activation of PMI reporting via physical layer (L1) signalling. This may take the form of a DCI message that either explicitly requests PMI reporting (option a) or references the activation of CSI Report Config ID2 (option c). The same DCI message may also implicitly deactivate the SRS resource associated with the former configuration, provided that such behaviour has been configured in advance via RRC signalling. An alternative implementation may allow the DCI message to signal SRS resource ID activation, which, through pre-established associations, also implies activation of the corresponding CSI Report Config containing PMI.

At step 435, in response to the received DCI signalling, the UE begins reporting according to CSI Report Config ID2, which includes the PMI. Simultaneously, the UE continues transmitting SRS based on the still-active SRS Resource ID1 unless otherwise instructed via signalling.

At step 440, the base station calculates beamforming weights for the PDSCH based on the newly received PMI, or a combination of PMI and SRS. This enables the network to adaptively select an improved beamforming strategy based on the more relevant or higher quality information available, leveraging either UE-side feedback (PMI) or network-side SRS measurements, or both. This procedure allows for more seamless transition between SRS-based and PMI-based beamforming modes without requiring RRC reconfiguration at the moment of switching, thereby reducing latency, overhead, and energy consumption at the UE, while maintaining high-performance beamforming capabilities.

In alternative implementations, the CSI reporting and SRS configurations may be simplified depending on deployment-specific requirements. For example, the network may configure CSI-ReportConfig using 4-port CSI-RS with a single resource, rather than multiple 8-port CSI-RS resources, to reduce complexity and signalling overhead. Similarly, CSI Report Config ID1 may represent a minimal CSI configuration (e.g., CQI-only) for SRS-based beamforming scenarios where PMI and CRI are not needed. This allows the network to tailor the CSI reporting burden to the capabilities of the UE and the needs of the cell. Additionally, in the initial configuration step (step 405), both the SRS resource and the PMI-inclusive CSI report configuration may be provisioned via RRC signalling but left inactive. The network may later choose to activate or deactivate PMI reporting dynamically based on real-time evaluation of criteria such as uplink SINR, low mobility (e.g., based on AMF input or UE assistance signalling), non-cell-edge status, or high downlink traffic demand. This flexible framework permits fine-grained control over beamforming strategy selection and supports real-time optimization of uplink resource use and UE energy consumption.

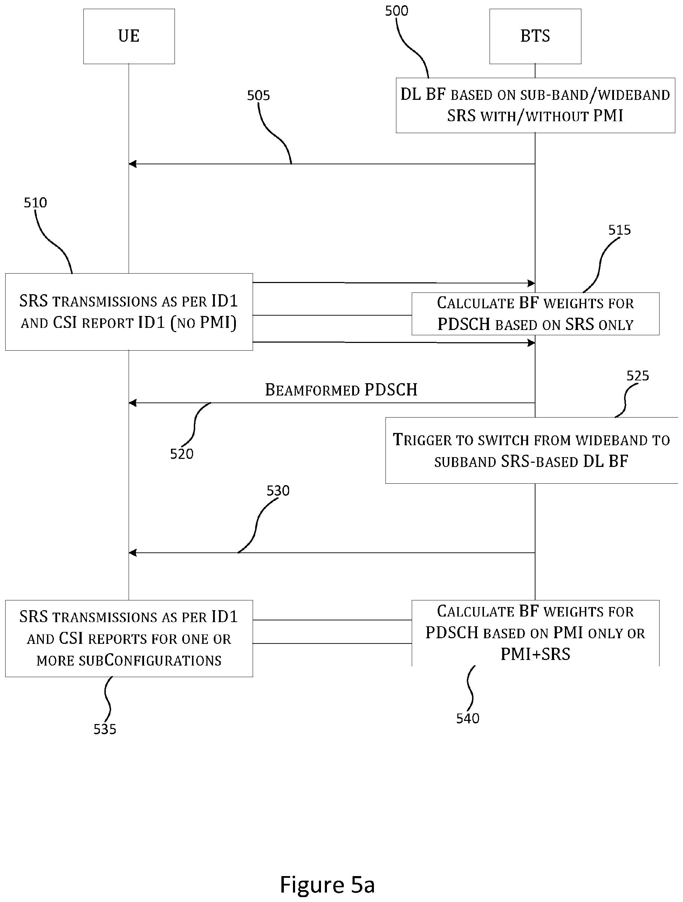

Figure 5a illustrates a dynamic sub-band versus wideband SRS (de)activation procedure, enabling the network to improve DL BF by flexibly controlling the activation of SRS resources and corresponding CSI reporting configurations. This arrangement supports efficient switching between wideband and sub-band SRS transmissions and enables dynamic activation of PMI-based reporting, using lightweight MAC control element (MAC-CE) or downlink control information (DCI) signalling. The procedure allows the network to efficiently manage scarce and expensive wideband SRS resources, assigning them only to the most promising UEs based on real-time conditions such as downlink data volume or channel quality.

At step 500, the system begins with DL beamforming based on either sub-band or wideband SRS transmissions. The network may be using either type of SRS resource, and PMI may or may not be included in the CSI reports at this stage.

At step 505, through new RRC signalling, the network configures the UE with two SRS resources: SRS Resource ID1 corresponding to a sub-band SRS (for DL BF) and SRS Resource ID2 corresponding to a wideband SRS (also for DL BF). In addition, the UE is configured with at least two CSI Report Configurations: CSI Report Config ID1, which includes CRI and CQI but excludes PMI (and is set as active), and CSI Report Config ID2, which includes CRI, RI, PMI, and CQI (and is set as inactive). An optional association between CSI Report Config ID2 and SRS Resource ID1 may be configured via RRC signalling. These configurations enable dynamic switching between sub-band and wideband SRS and between PMI-based and non-PMI-based feedback.

At step 510, the UE begins SRS transmissions according to SRS Resource ID1 and sends CSI reports in accordance with CSI Report Config ID1, which excludes PMI. This enables the network to perform DL BF using only SRS-based estimates, with limited uplink signalling overhead and reduced UE processing requirements.

The inclusion of the CRI refers specifically to the CRI as part of the CSI report configuration, rather than any CRI that may appear in other contexts, such as beam reports. In some examples, the CRI may not be required as part of the CSI report configuration used for downlink beamforming in this embodiment. Accordingly, references to CRI in CSI Report Config ID1 and ID2 are intended to be illustrative, and may be omitted or replaced with other reporting quantities, depending on the network configuration and the specific reporting needs. The arrangement regarding the dynamic switching between sub-band and wideband SRS resources and between PMI-inclusive and PMI-excluded CSI configurations remain applicable regardless of the inclusion or omission of CRI.

At step 515, the network calculates the beamforming weights for the physical downlink shared channel (PDSCH) based solely on the received SRS measurements. Neither PMI nor, where applicable, CRI is used at this point.

At step 520, beamformed PDSCH transmissions continue using the SRS-based precoding determined in the previous step.

At step 525, the network evaluates whether a switch in SRS resources and/or CSI reporting strategy is warranted. This evaluation may be based on criteria such as the current downlink data amount, the buffer status of the UE, channel conditions, or scheduling needs. For example, if the UE is determined to no longer require a wideband SRS, or if another UE has become a higher priority candidate, the network may choose to release or reassign the expensive wideband SRS.

At step 530, the network signals the UE via MAC-CE or DCI to activate the sub-band SRS (SRS Resource ID1), deactivate the wideband SRS (SRS Resource ID2), and activate PMI reporting. This signalling may include explicit activation and deactivation of SRS resources and may refer to one or more CSI Report Config IDs or sub-configurations (e.g., CSI Report Config ID2 or its sub-config). Alternatively, the DCI signalling may implicitly activate PMI reporting by referencing an associated SRS resource or CSI Report Config, based on associations preconfigured via RRC. This enables the network to quickly reconfigure the reporting behaviour without requiring full RRC reconfiguration.

At step 535, the UE begins SRS transmissions according to SRS Resource ID1 and performs CSI reporting according to CSI Report Config ID2, which includes PMI. If multiple sub-configurations are associated with ID2, the UE may activate one or more sub-configured reporting instances as instructed.

At step 540, the network uses the newly received PMI, alone or in combination with SRS, to calculate updated beamforming weights for the PDSCH. This enables more refined and adaptive DL BF decisions, tailored to current channel conditions and traffic requirements.

The arrangement of this figure further supports advanced flexibility by allowing the network to configure each UE with multiple orthogonal SRS configurations using different cyclic shift values and/or transmission comb values. These parameters ensure that SRS transmissions from different UEs remain orthogonal even if they occupy overlapping time-frequency resources. For example, cyclic shift values from 0 to 7 can be used to configure up to eight orthogonal SRS transmissions across UEs within the same time and frequency resources. Transmission comb offset values (e.g. for comb2 0 or 1) define whether the SRS is transmitted on even or odd subcarriers. By preconfiguring these orthogonal resources in the RRC phase and only activating them as needed using MAC-CE or DCI, the network avoids the delay and inefficiency associated with frequent RRC reconfigurations. This allows the network to dynamically reassign expensive SRS resources, such as wideband SRS, to the most promising UEs. When a given SRS resource becomes available (e.g., due to buffer depletion or reduced channel quality of a previous UE), the network can reallocate that resource to another UE in real time. This supports improved spectral efficiency, resource utilization, and overall system performance. Further, the number of available orthogonal cyclic shifts depends on the configured comb value. For example, with comb2, up to 8 cyclic shift values (0 to 7) can be used, enabling eight orthogonal SRS transmissions in overlapping time-frequency resources. With comb4, the number of available cyclic shifts increases, thereby supporting a greater number of orthogonal UEs within the same resource space. The comb value itself determines the frequency-domain spacing of the SRS resource elements: for instance, comb2 allocates every second subcarrier, while comb4 allocates every fourth subcarrier. This trade-off between spectral density and number of orthogonal transmissions allows the network to flexibly manage resource reuse across multiple UEs, especially in scenarios with dense UE deployments or limited uplink resources.

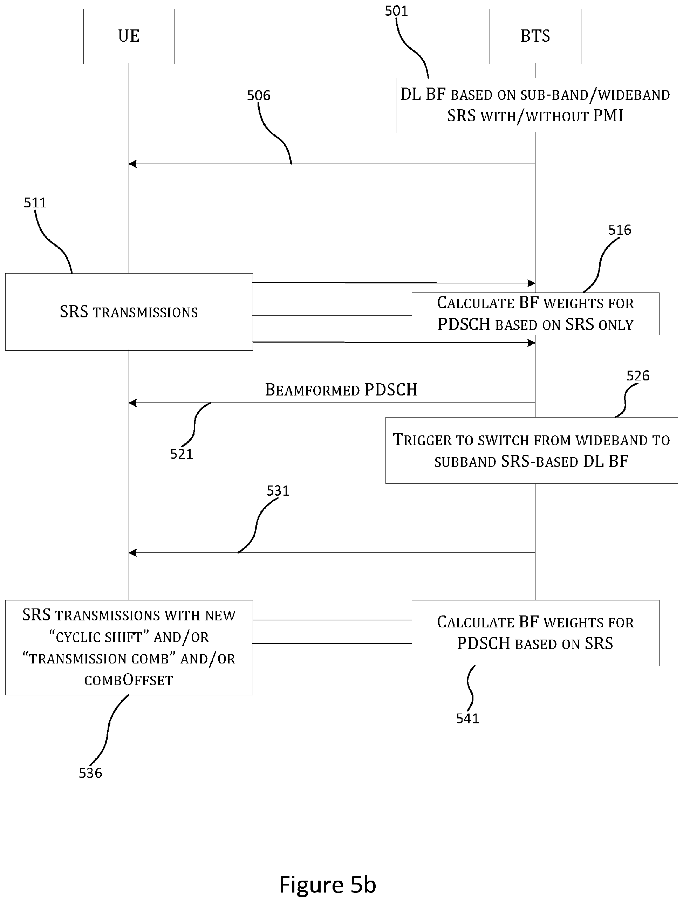

In the further example embodiment of Figure 5b, there is shown an enhanced dynamic procedure for reconfiguring SRS parameters used for downlink beamforming, enabling efficient allocation and reuse of costly SRS resources across UEs. The figure begins with step 501, showing the network operating with downlink beamforming based on either subband or wideband SRS. This setup allows the base station to calculate beamforming weights for the PDSCH transmissions based on SRS measurements received from the UE.

In step 506, the network sends new RRC signalling to the UE to configure several orthogonal SRS resource configurations. These SRS configurations are not immediately activated but are instead provisioned for future use. Each configuration may differ in cyclic shift, transmission comb, or combOffset parameters. This pre-configuration allows the network to quickly switch between SRS setups using lightweight MAC-CE or DCI signalling rather than costly RRC reconfigurations. The configurations remain inactive until dynamically triggered by the network.

At step 511, the UE begins transmission of SRSs according to the first active SRS resource configuration, denoted as ID1. Simultaneously, the UE performs CSI reporting using the configuration ID1, which excludes PMI feedback. The PDSCH beamforming remains purely based on SRS-based channel state information.

In step 516, the network receives these SRS transmissions and calculates the beamforming weights needed for the current transmission intervals. These weights are applied in step 521, where the network continues to transmit the PDSCH using beamformed signals based on the current SRS-based measurements.

At step 526, the network implementation monitors a set of internal criteria to determine whether a switch in SRS configuration is needed. This evaluation may consider the current downlink data volume for the UE or other scheduling constraints. Based on this evaluation, the network identifies whether a less expensive SRS resource, defined by alternative cyclic shift, transmission comb, or combOffset values, should be assigned to the UE.

Step 531 depicts the network issuing a new MAC-CE or DCI signalling message to the UE. This signalling indicates the deactivation of the currently active SRS configuration and the activation of an alternate configuration with different cyclic shift and/or transmission comb and/or combOffset. The goal is to optimize the use of frequency and code-domain orthogonality, enabling multiplexing of multiple UEs over the same physical SRS resource pool. For example, by varying the cyclic shift (e.g., from 0 to 7 for comb2), the same frequency-time SRS resource can be reused across eight UEs without interference. Transmission combs (e.g., comb2 or comb4) determine the spacing of the SRS elements across frequency, while combOffset (e.g., 0 or 1 for comb2) defines the subcarrier alignment. These parameters together allow the network to finely control SRS orthogonality and reuse.

In step 536, the UE begins SRS transmissions using the newly indicated parameters. A pre-defined delay, such as waiting until a particular symbol in the next flexible slot, may be applied before activation, giving the gNB precise control over the timing of the configuration change without requiring additional signalling fields in the DCI or MAC-CE. This efficient timing control enables seamless switching between SRS configurations.

Finally, in step 541, the network receives the updated SRS transmissions from the UE and recalculates the downlink beamforming weights accordingly. With this updated configuration, the network continues beamformed PDSCH transmission optimized for the new SRS setting. The system allows the network to maintain high beamforming accuracy while minimizing overhead and maximizing reuse of spectral and code-domain resources across the cell.

The network may indicate, via MAC-CE or DCI, not only the activation of a subband or wideband SRS configuration but also the duration for which it should remain active. This duration may be explicitly signalled or preconfigured via RRC, allowing the UE to apply the configuration for a fixed time before automatically reverting to a default setting.

In some cases, the activation signalling may be group-common, enabling multiple UEs to receive the same command while applying their own UE-specific durations as configured via RRC. This supports efficient signalling and scalable coordination. The network may also explicitly deactivate a currently active SRS configuration before the duration expires, e.g., to reassign resources to another UE, via DCI or MAC-CE. Both activation and deactivation of subband or wideband SRS configurations may thus be managed dynamically and efficiently using lightweight signalling. This dynamic mechanism allows the network to finely adjust and reassign preconfigured SRS resources among UEs with minimal latency. By using lightweight signalling, such as MAC-CE or DCI, to modify SRS-related parameters (e.g., cyclic shift, transmission comb, or combOffset), the network can temporarily allocate enhanced SRS configurations to UEs with high data demands, then promptly reassign those same resources to other UEs once the demand subsides, without triggering more costly RRC reconfigurations.

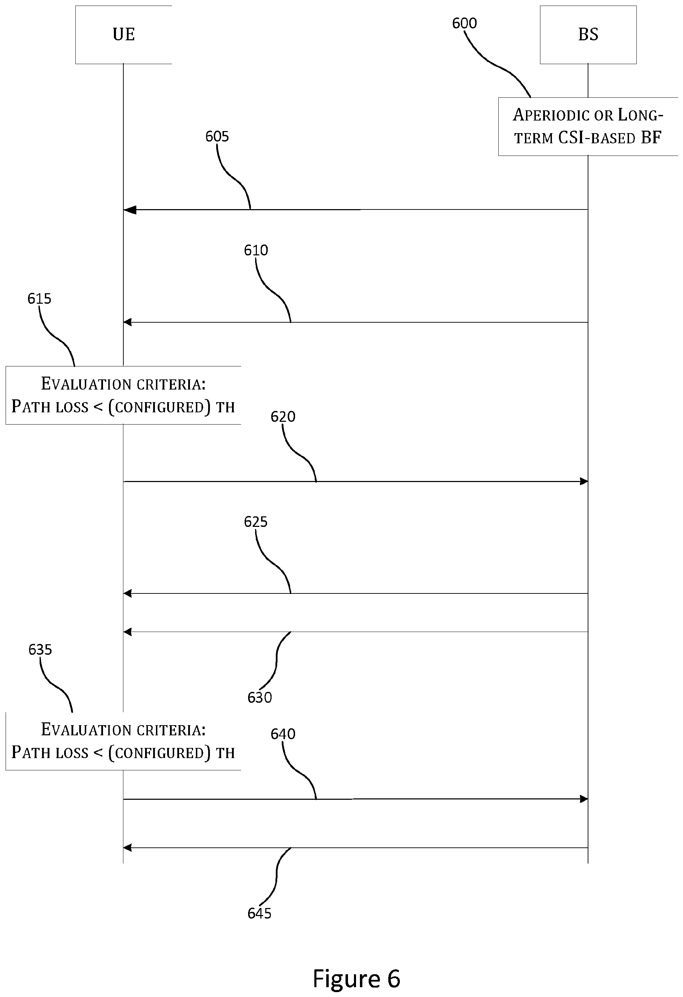

Figure 6 illustrates a UE-driven procedure for dynamic (de)activation of PMI reporting and SRS transmissions based on a configured path loss (PL) or received signal quality criterion. This embodiment enables autonomous decision-making at the UE side, allowing it to initiate a switch between different beamforming strategies (PMI-based or SRS-based) according to real-time radio conditions. The switching logic leverages predefined criteria based on signals such as Wake-Up Signal (WUS), Synchronization Signal Block (SSB), or CSI-RS, thereby enhancing responsiveness to spatial movement, link quality degradation, or improvement.

At step 600, the system begins with beamforming based on aperiodic or long-term CSI reporting. At this stage, the UE may be configured to transmit CSI reports (including PMI) based on a pre-established configuration that does not adapt dynamically to changing propagation conditions unless explicitly reconfigured.

At step 605, the network configures the UE via RRC signalling with the necessary parameters to support autonomous beamforming switching. This includes the provisioning of two CSI Report Configurations: a first configuration (CSI Report Config ID1) that does not include PMI (e.g., CRI-CQI only) and is set as active, and a second configuration (CSI Report Config ID2) that includes PMI (e.g., CRI-RI-PMI-CQI) and is initially inactive. These configurations may be associated with SRS resources such as SRS Resource ID1, configured for DL beamforming purposes. Additionally, the RRC message includes switching criteria based on one or more downlink signals, LP-WUS (Low Power Wake-Up Signal), DCP-WUS (Downlink Control Plane WUS), SSB, or CSI-RS, used by the UE to assess path loss or received power.

At step 610, the base station transmits one or more of the configured downlink signals, such as LP-WUS, DCP-WUS, SSB, or CSI-RS, towards the UE. These signals are used by the UE as reference inputs for signal quality evaluation and PL estimation.

At step 615, the UE receives the designated signals and processes them according to the configured criteria. Based on the signal measurements, the UE estimates the current path loss or received signal strength. This evaluation may be performed at the wake-up receiver (WRx) side in the case of LP-WUS or using the main receiver for SSB/CSI-RS. Additional switching criteria such as UE mobility status (e.g., stationary or not at cell edge) may also be used. If a significant change in PL or signal strength is observed, for example, a drop below a configured threshold, the UE determines that a configuration switch is warranted.

At step 620, depending on the evaluation outcome, the UE selects one of two options. In Option 1, the UE initiates a request to switch to another configuration, such as activating CSI Report Config ID1 or ID2, or switching SRS Resource IDs as appropriate. This switch may correspond to transitioning from SRS-based to PMI-based beamforming, e.g., when moving from cell centre to cell edge, or vice versa. The network may respond in step 625 with DCI signalling indicating the activation of another CSI report configuration or SRS resource. In Option 2, the UE determines that further evaluation is needed before switching and may initiate a request to the base station to enable specific downlink signals such as SSBs to reassess the switching criteria. In response, the network transmits in step 630 the requested signal, such as OD-SSB or CSI-RS.

At step 635, following reception of the additional signals, the UE performs a re-evaluation of the path loss or received power. If the updated evaluation meets the switching criteria, the UE may proceed in step 640 to switch to another CSI report configuration or SRS resource. The network may then in step 645 provide updated DCI signalling indicating the activation of the new configuration.

The UE is permitted to continue with its current CSI and SRS configurations in cases where the received signal strength remains stable, above threshold, or where the variation in measurements is too small (e.g., less than ±x dB). Furthermore, the UE may be required to receive a minimum number of valid LP-WUS, DCP-WUS, SSB, or CSI-RS transmissions over a defined time interval before performing a re-evaluation. If the UE fails to decode the designated downlink signal for a predefined number of consecutive attempts, it may suspend the switching operation to avoid incorrect reconfigurations. This approach allows the UE to more efficiently manage beamforming configurations based on real-time link conditions without requiring explicit signalling from the network each time. This results in reduced latency, minimized signalling overhead, and optimized energy consumption while maintaining robust downlink performance.

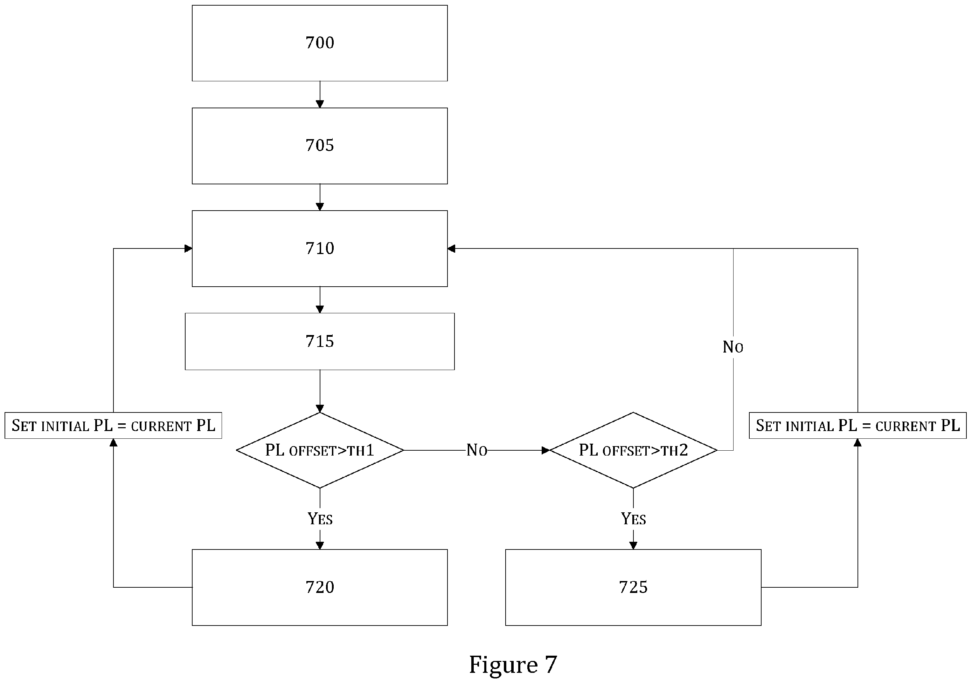

Figure 7 illustrates a UE-implemented process for managing beamforming resource selection based on path loss variation, allowing dynamic and autonomous adjustment of CSI and SRS reporting configurations. The process begins in step 700 with the UE receiving, from the network, a configuration that includes two path loss thresholds (th1 and th2), averaging window lengths (N and M), and the transmit power of LP-WUS or LP-SS. These values enable the UE to calculate path loss accurately and respond accordingly to observed radio conditions.

To begin the evaluation, the UE computes a path loss value in step 705 by averaging the path loss across the first N received LP-WUS or LP-SS signals. This initial value is stored as a reference. The UE then continues to compute the current path loss in step 710 by averaging the most recent M measurements from the same type of signal. By comparing the current and initial values, the UE determines the path loss offset in step 715, which represents the observed degradation or improvement in signal quality over time.

If the calculated offset exceeds the higher threshold th1, the UE interprets this as a moderate but meaningful change in link quality. In this case, the UE triggers a re-evaluation of the switching criteria in step 720, which may include a request to the network to enable SSB transmissions. This allows the UE to collect more reliable signal quality data before making a switching decision, particularly in cases where the LP-WUS or LP-SS signal measurements are insufficient or inconsistent.

If the offset exceeds the lower threshold th2, the UE determines that the channel condition has changed significantly and initiates a switch in step 725 to another CSI Report Configuration or SRS Resource. This may involve deactivating the currently active configuration and activating one that is better suited to the updated link conditions. For example, the UE may switch from a configuration using SRS-based downlink beamforming to one that uses PMI-based feedback, or vice versa, depending on whether it has moved toward or away from the cell edge or experienced a notable change in signal strength. The threshold values (th1, th2) may be adjusted dynamically based on one or more operating conditions, such as UE velocity, changes in the radio environment, or historical trends in path loss variation,

Following this evaluation, the UE resets the path loss to the value of the most recent current path loss, ensuring that future offset calculations are relative to the most recent stable channel state. This ongoing loop enables continuous adaptation while avoiding unnecessary switches when signal conditions remain stable.

Once the UE has completed the evaluation and determined that a change is needed, it dynamically indicates this to the network using new UCI signalling. Specifically, the UE transmits a new UCI-based indication that includes a PMI report request when appropriate. If the criteria for switching have been met, the UE requests that the network activates a new CSI Report Configuration or SRS Resource. If the evaluation has not yielded a conclusive need to switch, the UE may instead request the network to enable SSBs to improve the reliability of future path loss measurements. In response, the base station may activate downlink SSB transmissions targeted to the UE, which can then use those for a refined evaluation of whether a switch is required. It is noted that SSBs are typically transmitted by the network as periodic broadcast signals and are not UE-specific. As such, while a UE may evaluate path loss or signal strength based on received SSBs, the network may not support dedicated or aperiodic SSB transmissions targeted to individual UEs. Alternatively, CSI-RS may be used to support UE-specific tracking.

This autonomous switching mechanism provides significant operational advantages. It can allow the network and UE to more efficiently utilize beamforming-related resources, such as CSI reporting and SRS transmissions, only when they are necessary and appropriate. The ability of the UE to make switching decisions locally reduces dependency on frequent RRC reconfigurations, thereby lowering signalling overhead and latency. By selectively activating or deactivating resource-intensive reporting operations, the approach reduces power consumption on both UE and base station sides, while supporting high-performance downlink transmission by adapting beamforming strategies to the prevailing radio environment.

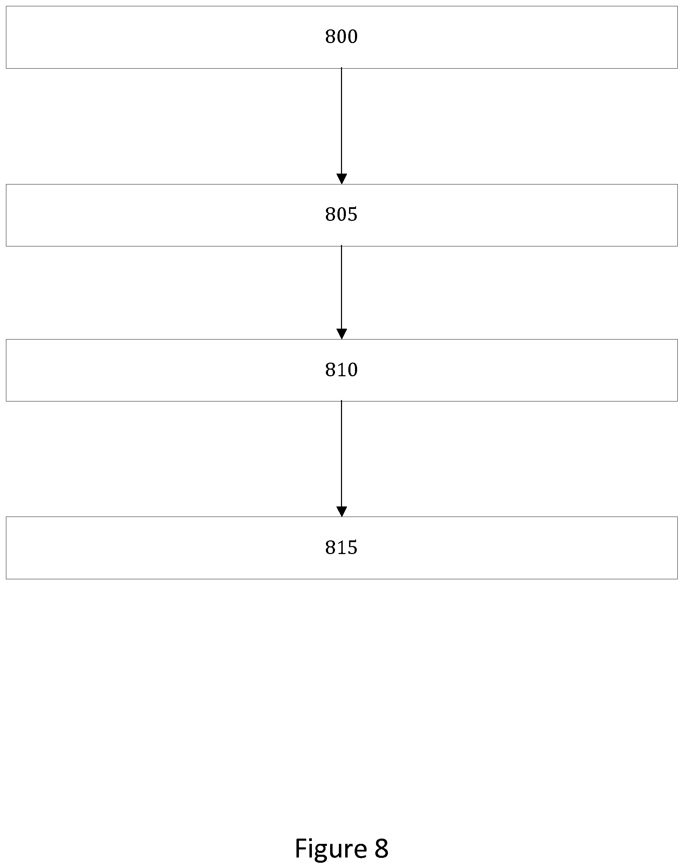

Figure 8 illustrates a flow diagram according to an example embodiment executed by a first apparatus, such as UE, comprising at least one processor and at least one memory storing instructions. At step 800, the first apparatus receives, from the second apparatus, at least a first CSI reporting configuration including an association with at least a first SRS resource or resource set, optionally comprising one or more SRS transmission parameters. In some examples, more than one SRS resource or resource sets may be transmitted. At step 805, the first apparatus receives from the second apparatus an indication related to activation or deactivation of the first CSI reporting configuration. At step 810, the first apparatus determines an activation status of the first SRS resource or resource set based at least in part on the received indication from the second apparatus. At step 815, the first apparatus adjusts at least one of a measurement operation or a reference signal transmission based at least in part on the activation or deactivation of the first CSI reporting configuration and the activation status of the first SRS resource or resource set. In a further example, the first apparatus may determine the activation status of the CSI reporting configuration based at least in part on an activation or deactivation indication related to the associated SRS resource or resource set. This enables a reverse inference path in which the SRS activation status governs the CSI reporting behaviour.

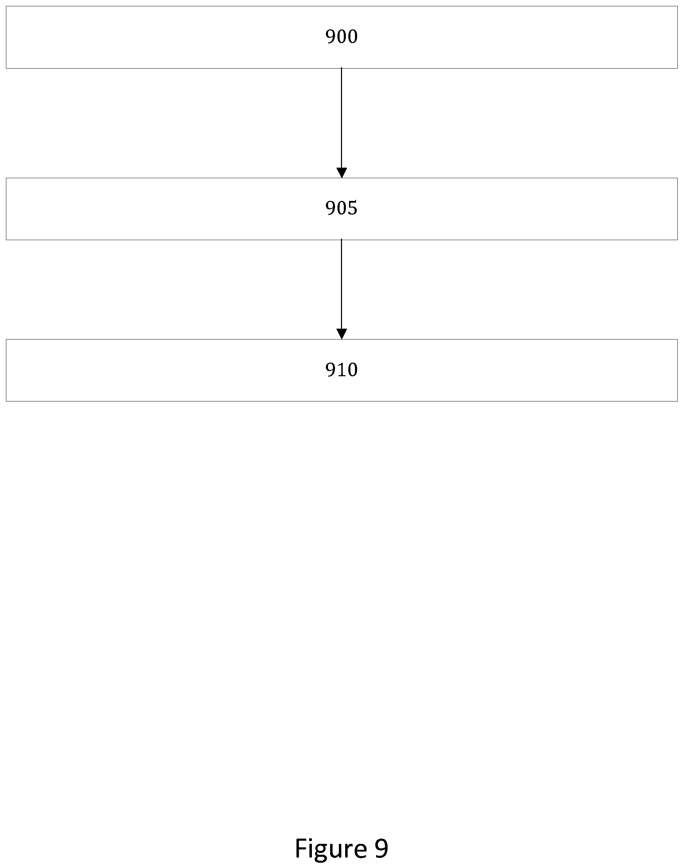

Figure 9 illustrates another flow diagram according to an example embodiment executed by a first apparatus, such as UE, comprising at least one processor and at least one memory storing instructions. At step 900, the first apparatus receives from a second apparatus an SRS resource or resource set, wherein the SRS resource or resource set, optionally comprising a list of SRS parameters. At step 905, the first apparatus receives from the second apparatus an indication to update at least one of the SRS parameters. At step 910, the first apparatus transmits SRS to the second apparatus based at least in part on the updated SRS parameters. The first apparatus does not transmit the updated configuration itself, but rather uses the updated parameters to perform SRS transmission. Accordingly, what is transmitted to the second apparatus is the SRS signal, now generated according to the updated configuration (e.g., using a different cyclic shift or transmission comb).

In some examples, the indication received from the second apparatus at step 805 may further indicate activation or deactivation of the first SRS resource or resource set, either explicitly or implicitly. In such cases, the first apparatus may determine the activation status of the first SRS resource or resource set based directly on the received indication. Conversely, the first apparatus may also determine the activation or deactivation of the first CSI reporting configuration based at least in part on the activation status of the first SRS resource or resource set. This mutual association between the CSI reporting configuration and the SRS resource or resource set enables flexible control of beamforming-related measurements and reporting operations. Optionally, the activation or deactivation of an SRS resource or resource set may also be performed explicitly via higher-layer signalling, such as a dedicated RRC configuration. For example, the first apparatus may be configured with both a first and second SRS configuration, each associated with different operational modes or reporting needs. Upon receiving an explicit activation of the second SRS configuration via RRC, the first apparatus may switch from the first to the second SRS configuration. Conversely, if the second configuration is already active, a subsequent RRC signalling message may instruct the first apparatus to revert to the first SRS configuration. This explicit signalling approach may complement or override dynamic indications received via MAC-CE or DCI, thereby enabling more persistent or mode-specific configuration changes under network control.

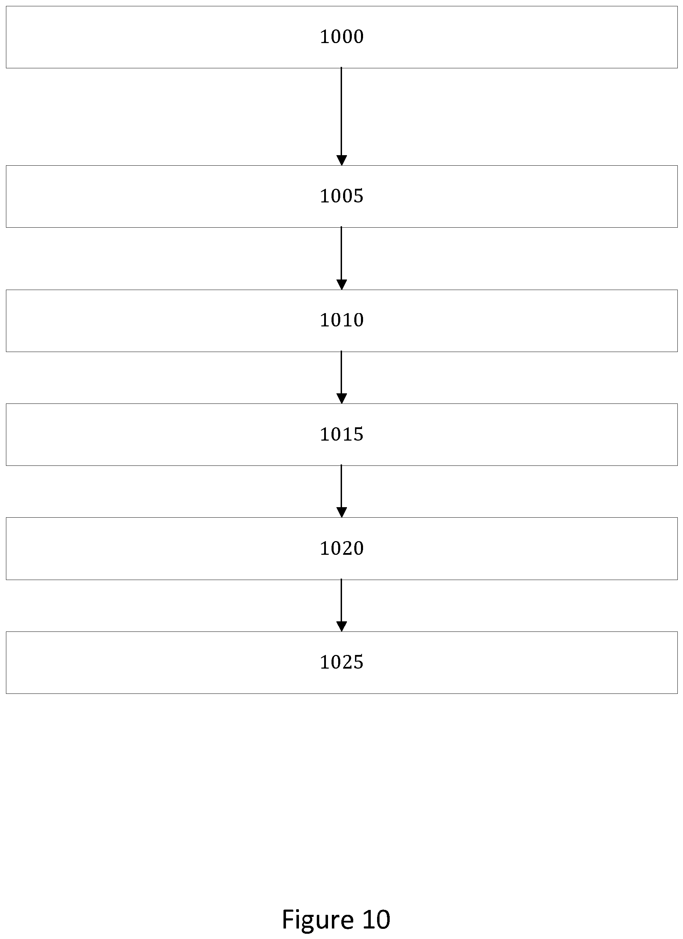

Figure 10 illustrates another flow diagram according to an example embodiment executed by a first apparatus, such as UE, comprising at least one processor and at least one memory storing instructions. At step 1000, the first apparatus receives from a second apparatus at least a first CSI Reporting Configuration and at least a first SRS resource or resource set wherein at least one CSI reporting configuration or at least one of an SRS resource or resource set configuration is activated.

At step 1005, the first apparatus receives from a second apparatus at least one evaluation criterion for determining at least one of the following: to switch between the first and a second CSI reporting configuration or SRS resource or resource set configuration. At step 1010, the first apparatus determines the switch to a second CSI reporting configuration or SRS resource or resource set. At step 1015, the first apparatus transmits an indication to the second apparatus to indicate the switch to a second CSI reporting configuration or SRS resource or resource set. At step 1020, the first apparatus receives from the second apparatus an indication to switch to a second CSI reporting configuration or SRS resource or resource set. At step 1025, the first apparatus performs measurements based at least in part on the activation status of the second CSI reporting configuration or SRS resource or resource set. In another example, the first apparatus may determine to refrain from transmitting SRS based at least in part on the evaluation criterion, for example, when the criterion indicates that SRS-based beamforming is not currently beneficial. In such cases, the apparatus may deactivate the corresponding SRS resource or resource set without switching to an alternative CSI reporting configuration.

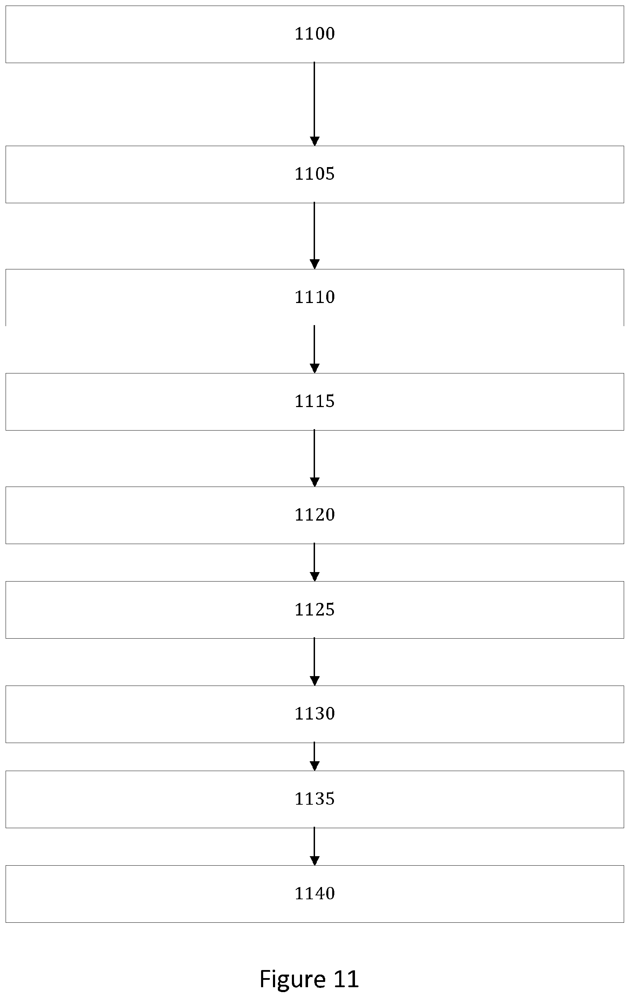

Figure 11 illustrates another flow diagram according to an example embodiment executed by a first apparatus, such as UE, comprising at least one processor and at least one memory storing instructions. At step 1100, the first apparatus receives from a second apparatus at least a first CSI reporting configuration and at least a first SRS resource or resource set, wherein at least one CSI reporting configuration or at least one SRS resource or resource set is activated. At step 1105, the first apparatus receives from the second apparatus at least one evaluation criterion comprising at least a transmit power of a reference signal selected from: a wake-up signal, WUS, a low power synchronization signal, LP-SS, or a synchronization signal block, SSB, and at least one threshold associated with a path loss offset. At step 1110, the first apparatus measures received power of a plurality of transmissions of the reference signal. At step 1115, the first apparatus computes a path loss offset based at least in part on a difference between a current path loss and an previous path loss, alternatively referred to as an "initial" path loss, the current and previous path loss each being values based on an average of received power measurements for respective sets of the reference signal; At step 1120, the first apparatus determines that the path loss offset satisfies the at least one threshold. At step 1125, the first apparatus determines a switch to a second CSI reporting configuration or SRS resource or resource set based at least in part on the determination that the path loss offset satisfies the at least one threshold. At step 1130, the first apparatus transmits an indication to the second apparatus to indicate the switch to the second CSI reporting configuration or SRS resource or resource set. At step 1135, the first apparatus receives from the second apparatus an indication to switch to the second CSI reporting configuration or SRS resource or resource set. At step 1140, the first apparatus performs measurements based at least in part on the activation status of the second CSI reporting configuration or SRS resource or resource set.

For consistency and clarity, terminology used throughout this description follows the conventions established in 5G (NR) specifications as defined by 3GPP. It is understood, however, that equivalent procedures, configurations, or parameters may be referred to using different names in future releases (e.g. 6G), and such equivalents are intended to be covered by the present disclosure.

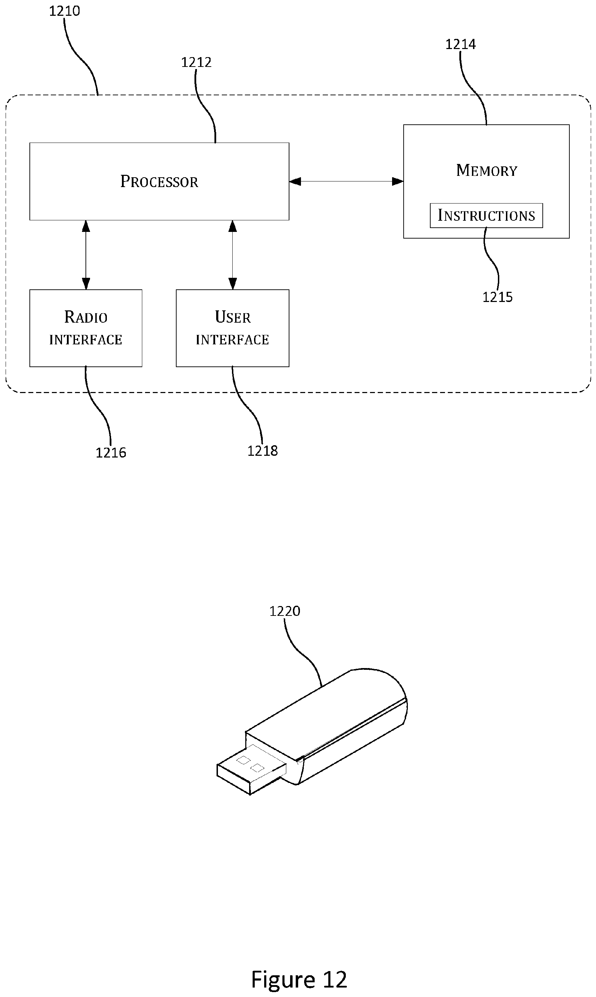

Fig. 12 shows, by way of example, a block diagram of an apparatus 1210. The apparatus 1210 comprises, for example, at least one processor 1212 and at least one memory 1214 storing instructions 1215 that, when executed by the at least one processor, cause the apparatus 1210 at least to perform the method or methods as disclosed herein, and any of the embodiments thereof. In an example, the at least one memory and the instructions (e.g. a computer program code, software), are configured, with the at least one processor, to cause the apparatus 1210 to perform the method or methods as disclosed herein, and any of the embodiments thereof.

A processor 1212 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 1214 may be implemented using any suitable data storage technology. The memory may comprise a database for storing data. The memory 1214 may be at least in part external to apparatus 10 but accessible to apparatus 1210.

The instructions 1215 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 1210 is a terminal device, such as the UE of earlier figures. As another example, the apparatus is comprised in such a terminal device, e.g. as a chipset configured to control the terminal device. The apparatus 1210 may be caused or configured to perform the method of any one or more of the embodiments described.

As another example, the apparatus 1210 is a network node. In another embodiment, the apparatus is comprised in such a network node, e.g. as a chipset configured to control the network node. The apparatus 1210 may be caused or configured to perform at least the method of FIG. 8 and/or any one or more of the embodiments described.

The apparatus may comprise one or more entities of any of protocol layers, such as a MAC entity, an RRC entity, an RLC entity, a PDCP entity or a PHY entity.

The apparatus 1210 comprises a radio interface 16. The radio interface 1216 may provide the apparatus 1210 with communication capabilities. The radio interface 1216 may comprise a receiver configured to receive information in accordance with at least one cellular or non-cellular standard. The radio interface 1216 may comprise a transmitter configured to transmit information in accordance with at least one cellular or non-cellular standard. The receiver may comprise more than one receiver. The transmitter may comprise more than one transmitter. The radio interface 1216 may comprise a transceiver configured to receive and transmit information in accordance with at least one cellular or non-cellular standard. The transceiver may comprise more than one transceiver.

The apparatus 1210 may comprise a user interface 1218 comprising, for example, at least one of a keypad, a microphone, a touch display, a display, a speaker, etc. The user interface 1218 may be used to control the apparatus by the user. The user interface 1218 may be external to the apparatus 1210. For example, the apparatus 1210 may be connected to another device, such as a computer, either via wireless or wired connection, and the apparatus 1210 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 1210. Such software may be stored in an external storage device, such as a USB drive 1220. For example, the at least one processor 1212, the memory 1214, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

## Claims

1. An apparatus, referred to as a first apparatus, comprising:
at least one processor; and
at least one memory storing instructions that, when executed by the at least one processor, cause the first apparatus to:
receive from a second apparatus at least a first Channel State Information, CSI, reporting configuration and at least a first Sounding Reference Signal, SRS, resource or resource set, wherein at least one CSI reporting configuration or at least one SRS resource or resource set is activated;
receive from the second apparatus at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset;
measure received power of a plurality of transmissions of the reference signal;
compute a path loss offset based at least in part on a difference between a current path loss and a previous path loss, the current and initial path loss each being values based on an average of received power measurements for respective sets of the reference signal;
determine that the path loss offset satisfies the at least one threshold;
determine a switch to a second CSI reporting configuration or SRS resource or resource set based at least in part on the determination that the path loss offset satisfies the at least one threshold;
transmit an indication to the second apparatus to indicate the switch to the second CSI reporting configuration or SRS resource or resource set;
receive from the second apparatus an indication to switch to the second CSI reporting configuration or SRS resource or resource set; and
perform measurements based at least in part on the activation status of the second CSI reporting configuration or SRS resource or resource set.

2. The apparatus of claim 1, wherein the transmit power of the reference signal is signalled to the first apparatus via radio resource control, RRC, configuration.

3. The apparatus of claim 1, wherein the received power of the reference signal is measured by a wake-up receiver (WRx).

4. The apparatus of any preceding claim, wherein the current path loss value is generated by averaging a predetermined number M of most recent path loss values.

5. The apparatus of claim 4, wherein the number M is determined by the second apparatus.

6. The apparatus of any preceding claim, wherein the at least one threshold associated with path loss offset comprises a first threshold and a second threshold.

7. The apparatus of claim 6, wherein the first threshold is lower than the second threshold.

8. The apparatus of claim 7, wherein satisfying the first threshold triggers the first apparatus to request the second apparatus to transmit an SSB.

9. The apparatus of claim 7 or claim 8, wherein satisfying the second threshold triggers a switch to a second CSI reporting configuration or SRS resource or resource set.

10. The apparatus of claims 6 to 9, wherein the threshold values are adjusted dynamically based on at least one operating condition.

11. The apparatus of any preceding claim, wherein the path loss offset is periodically evaluated by the first apparatus at fixed time intervals.

12. A system comprising a first apparatus and a second apparatus, the first apparatus comprising:
at least one processor; and
at least one memory storing instructions that, when executed by the at least one processor, cause the first apparatus to:
receive from a second apparatus at least a first channel state information, CSI, reporting configuration and at least a first sounding reference signal, SRS, resource or resource set, wherein at least one CSI reporting configuration or at least one SRS resource configuration is activated;
receive from the second apparatus at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset;
measure received power of a plurality of transmissions of the reference signal;
compute a path loss offset based at least in part on a difference between a current path loss and an initial path loss, the current and initial path loss each being values based on an average of received power measurements for respective sets of the reference signal;
determine that the path loss offset satisfies the at least one threshold;
determine a switch to a second CSI reporting configuration or SRS resource or resource set based at least in part on the determination that the path loss offset satisfies the threshold;
transmit an indication to the second apparatus to indicate the switch to the second CSI reporting configuration or SRS resource or resource set;
receive from the second apparatus an indication to switch to the second CSI reporting configuration or SRS resource or resource set; and
perform measurements based at least in part on the activation status of the second CSI reporting configuration or SRS resource or resource set.

13. A method comprising:
receiving at least a first Channel State Information, CSI, reporting configuration and at least a first Sounding Reference Signal, SRS, resource or resource set, wherein at least one CSI reporting configuration or at least one SRS resource or resource set is activated;
receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset;
measuring received power of a plurality of transmissions of the reference signal;
computing a path loss offset based at least in part on a difference between a current path loss and an initial path loss, the current and initial path loss each being based on an average of received power measurements for respective sets of the reference signal;
determining that the path loss offset satisfies the at least one threshold;
determining a switch to a second CSI reporting configuration or SRS resource or resource set based at least in part on the determination that the path loss offset satisfies the threshold;
transmitting an indication to indicate the switch to the second CSI reporting configuration or SRS resource or resource set;
receiving an indication to switch to the second CSI reporting configuration or SRS resource or resource set; and
performing measurements based at least in part on the activation status of the second CSI reporting configuration or SRS resource or resource set.

14. An apparatus, referred to as a first apparatus, comprising:
means for receiving at least a first Channel State Information, CSI, reporting configuration and at least a first Sounding Reference Signal, SRS, resource or resource set, wherein at least one CSI reporting configuration or at least one SRS resource or resource set is activated;
means for receiving at least one evaluation criterion comprising at least a transmit power of a reference signal selected from: a Wake-Up Signal, WUS, a Low Power Synchronization Signal, LP-SS, or a Synchronization Signal Block, SSB, and at least one threshold associated with a path loss offset;
means for measuring received power of a plurality of transmissions of the reference signal;
means for computing a path loss offset based at least in part on a difference between a current path loss and an initial path loss, the current and initial path loss each being based on an average of received power measurements for respective sets of the reference signal;
means for determining that the path loss offset satisfies the at least one threshold;
means for determining a switch to a second CSI reporting configuration or SRS resource or resource set based at least in part on the determination that the path loss offset satisfies the threshold;
means for transmitting an indication to indicate the switch to the second CSI reporting configuration or SRS resource or resource set;
means for receiving an indication to switch to the second CSI reporting configuration or SRS resource or resource set; and
means for performing measurements based at least in part on the activation status of the second CSI reporting configuration or SRS resource or resource set.
